# EUROPÄISCHE PATENTSCHRIFT

(11) **EP 1 088 711 B1**
(45) Veröffentlichungstag und Bekanntmachung des Hinweises auf die Patenterteilung: **14.02.2007**
(21) Anmeldenummer: 00119250.9
(22) Anmeldetag: 06.09.2000
(51) Int. Cl.: B60R 21/205

(54) **Beifahrer-Airbagmodul für Kraftfahrzeuge**
Passenger side air bag module for a motor vehicle
Module de sac gonflable côté passager d'un véhicule automobile

(30) Priorität: 30.09.1999 DE 19947262
(43) Veröffentlichungstag der Anmeldung: 04.04.2001
(73) Patentinhaber: ADAM OPEL AG, 65423 Rüsselsheim (DE)
(72) Erfinder: Rick, Ulrich, Dipl.-Ing., 55595 Roxheim (DE); Medla, Waldemar, Dipl.-Ing., 64521 Gross-Gerau (DE); Maul, Holger, Dipl.-Ing., 64846 Gross-Zimmern (DE); Nitsche, Martin, Dipl.-Ing., 60435 Frankfurt (DE)

(56) Entgegenhaltungen:
- DE-A- 4 431 718
- DE-A- 4 442 202
- GB-A- 2 327 921
- US-A- 5 582 423
- US-A- 5 647 608

## Beschreibung

Die Erfindung betrifft einen Beifahrer-Airbagmodul für Kraftfahrzeuge gemäß dem Oberbegriff des Patentanspruchs 1.

Ein Airbagmodul der vorstehenden Art ist beispielsweise in US 5,582,423 beschrieben. Das dort in Fig. 1 gezeigte Airbagmodul weist ein Gehäuse zur Aufnahme eines Gasgenerators sowie einen mit dem Gehäuse mit Hilfe von Rastnasen und Rastöffnungen verbindbaren, einen gefalteten Airbag aufnehmenden Airbagbehälter auf. Die Trennung zwischen dem Gehäuse für den Gasgenerator und dem Behälter für den Airbag erlaubt es, den Airbag in dem Behälter anzubringen, ohne gleichzeitig den Gasgenerator handhaben zu müssen; erst nachdem der Airbag im Behälter angebracht ist, wird dieser auf dem Gehäuse des Gasgenerators verrastet.

Nachteilig an dieser Konstruktion ist, dass Laschen des Gehäuses, welche die Rastöffnungen begrenzen, elastisch verformbar sein müssen, um das Eingreifen der Rastnasen in die Rastöffnungen zu ermöglichen, und dass es kaum möglich ist, mit Hilfe dieser elastischen Rastnasen den Airbagbehälter exakt an Ort und Stelle zu halten, wenn der Gasgenerator gezündet wird.

Ein weiterer Nachteil ist, dass in Folge der Anbringung des zusammengefalteten Airbags unmittelbar vor einer Gaseintrittsöffnung des Airbagbehälters bei einem Zünden des Gasgenerators der Airbag im weitgehend noch zusammengefalteten Zustand beschleunigt und aus dem Behälter hinaus geschleudert werden muss, was einerseits zu einer hohen Druckbelastung des Airbags während des Austreibens aus dem Behälter führt und außerdem die Gefahr mit sich bringt, dass ein Fahrzeuginsasse von dem noch nicht vollständig entfalteten Airbag getroffen wird.

Aus DE 44 42 202 A1 und DE 44 31 718 A1 ist bekannt, den Airbag in einer in Bezug auf den Gasgenerator seitlich versetzten Kammer unterzubringen, so dass dieser beim Zünden des Gasgenerators nicht als Paket ausgetrieben wird, sondern sich aus der seitlichen Kammer heraus nach und nach entfaltet. Diese seitliche Kammer ist an einem den Gasgenerator aufnehmenden Gehäuse gebildet, was zur Folge hat, dass der Gasgenerator montiert sein muss, wenn der Airbag in die Kammer gefaltet wird.

Der Erfindung liegt daher die Aufgabe zugrunde, ein Beifahrer-Airbagmodul nach dem Oberbegriff des Patentanspruches 1 zu schaffen, der relativ einfach und montagefreundlich aufgebaut ist, ohne dass die genannten Nachteile auftreten.

Diese Aufgabe wird erfindungsgemäß durch die Merkmale des Patentanspruches 1 gelöst. Vorteilhafte Weiterbildungen der Erfindung sind in den Unteransprüchen angegeben.

Durch diese Gestaltung, bei der am Beifahrer-Airbagmodul eine mit dem Gehäuse verbindbare Airbagwanne vorgesehen ist, die den Gasgenerator zumindest teilweise umschließt und einen im Wesentlichen seitlich des Gasgenerators angeordneten Aufnahmeraum für den Airbag aufweist, kann die Montage des Beifahrer-Airbagmoduls im Wesentlichen in zwei einfachen Schritten vollzogen werden. Zunächst wird eine separate Baueinheit fertiggestellt, die im Wesentlichen aus dem Gehäuse sowie aus dem in einem Aufnahmeraum des Gehäuses montierten Gasgenerator besteht. Das Gehäuse kann dabei auch mit Befestigungsmitteln zur Montage im Kraftfahrzeug versehen werden. Eine weitere Baueinheit, die im Wesentlichen die Airbagwanne, den in der Airbagwanne gefalteten Airbag sowie eine den Airbag in der Airbagwanne fixierende bzw. schützende Abdeckung umfasst, wird ebenfalls separat fertig gestellt.

In einem weiteren Schritt werden dann die genannten montagefertigen Baueinheiten rastend miteinander verbunden, so dass ein komplett vormontiertes Beifahrer-Airbagmodul mit reduzierten Herstellungs- und Montagekosten entsteht.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt teilweise schematisch in
- Fig. 1: eine perspektivische Ansicht eines Beifahrer-Airbagmoduls im noch nicht montierten Zustand;
- Fig. 2: einen Querschnitt durch das montagefertige Beifahrer-Airbagmodul nach Fig. 1;
- Fig. 3: einen Längsschnitt durch das montagefertige Beifahrer-Airbagmodul nach Fig. 1;
- Fig. 4: eine vergrößerte Darstellung gemäß Einzelheit **Y** in Fig. 2.

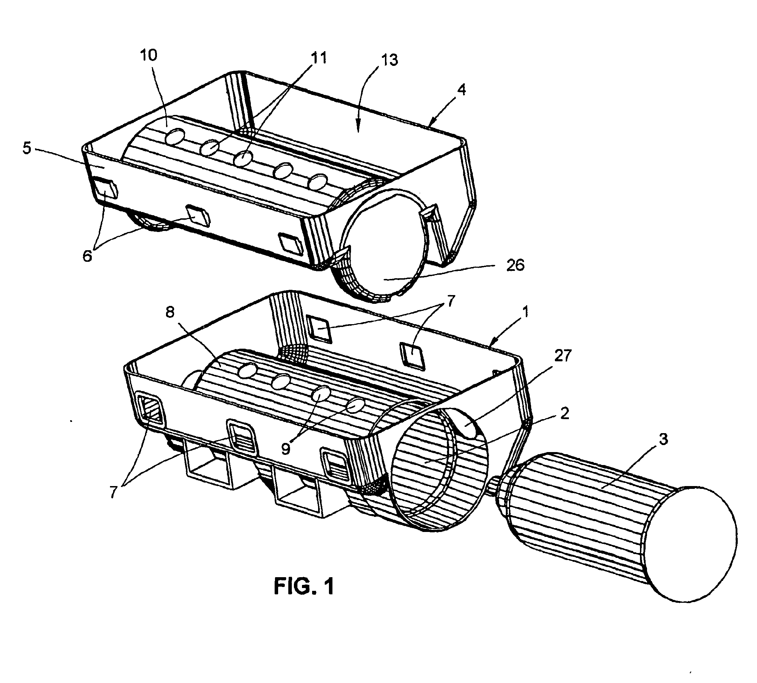

Die Fig. 1 zeigt ein Beifahrer-Airbagmodul in seinen wesentlichen Bestandteilen, welches nach der Fertigstellung zum Einbau unter einer nicht dargestellten Instrumententafel vorgesehen ist. Das Beifahrer-Airbagmodul besteht im Wesentlichen aus einem Gehäuse 1, das etwa kastenförmig ausgebildet ist und im unteren Bereich einen zylindrischen Aufnahmeraum 2 für einen Rohrgasgenerator 3 aufweist. In das Gehäuse 1 ist eine Airbagwanne 4 einsetzbar, in welcher sich ein nicht dargestellter Airbag im gefalteten Zustand befindet. An der Airbagwanne 4 sind an beiden Längsseiten 5 nach außen gerichtete Rastnasen 6 vorgesehen, die bei der Montage in entsprechend am Gehäuse 1 ausgebildete Rastöffnungen 7 einrasten und dadurch einen festen Verbund zwischen dem Gehäuse 1 und der Airbagwanne 4 bilden.

Weiterhin sind am Gehäuse 1 an einer den Aufnahmeraum 2 bildenden Gehäusewand 8 mehrere gleichmäßig in Längsrichtung des Rohrgenerators 3 angeordnete Öffnungen 9 erkennbar, die zusammen mit entsprechend an der Airbagwanne 4 im Bereich eines den Rohrgenerator 3 bzw. die Gehäusewand 8 übergreifenden Abschnitts 10 vorgesehenen Öffnungen 11 die Diffusoröffnungen für den Durchtritt der im Falle eines Unfalls durch den Rohrgenerator 3 erzeugten Gase bilden. In Fig. 1 sind diese Öffnungen 9, 11 etwa gleich groß ausgebildet und korrespondierend zueinander angeordnet. Alternativ hierzu können zur Steuerung des Aufblasverhaltens des Airbags sowie zur Verteilung bzw. besseren Aufnahme der Druckkräfte die Öffnungen 9 an der Gehäusewand 8 größer oder kleiner als die Öffnungen 11 am Abschnitt 10 der Airbagwanne 4 ausgebildet sein.

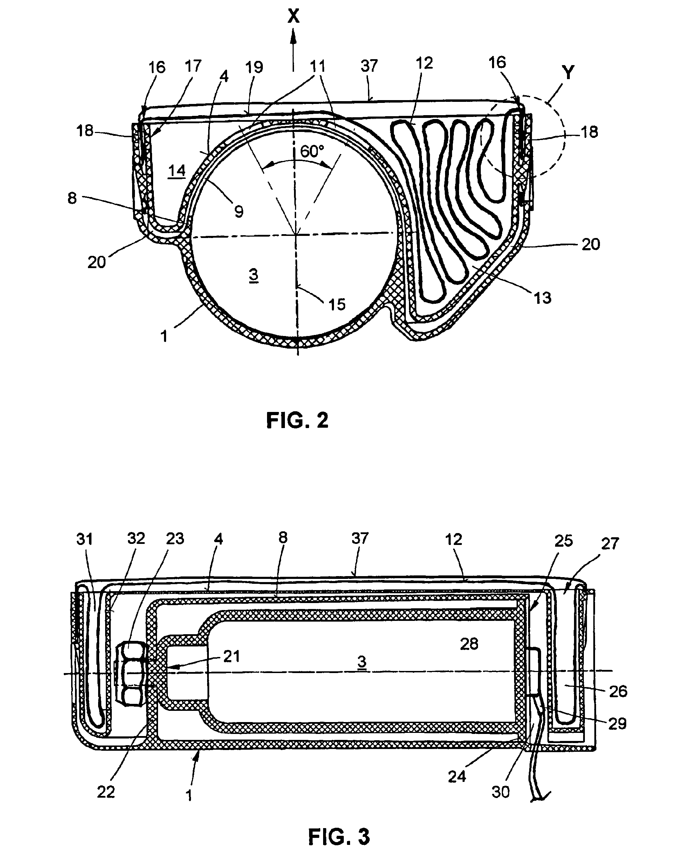

Wie insbesondere in Fig. 2 dargestellt, weisen das Gehäuse 1 und die Airbagwanne 4 jeweils eine asymmetrische Form auf, wobei sich der Airbag 12 im gefalteten Zustand im Wesentlichen neben dem Rohrgasgenerator 3 in einem an der Airbagwanne 4 vorgesehenen Packraum 13 befindet. Eine solche Anordnung des Airbags 12 hat den Vorteil, dass im Falle der Aktivierung des Rohrgasgenerators 3 nicht der gesamte Airbag 12 in einem zum Teil noch gefalteten Zustand in Richtung des Insassen geschleudert wird, sondern der Airbag 12 wird während des Entfaltungsvorgangs nach und nach bis zum vollständigen Aufblasen aus dem Packraum 13 herausgezogen. Dies ermöglicht ein besonders "sanftes" Aufblasen des Airbags 12, wodurch die Gefahr einer Verletzung des nicht in der richtigen Position befindlichen Insassen durch den Airbag 12 reduziert wird.

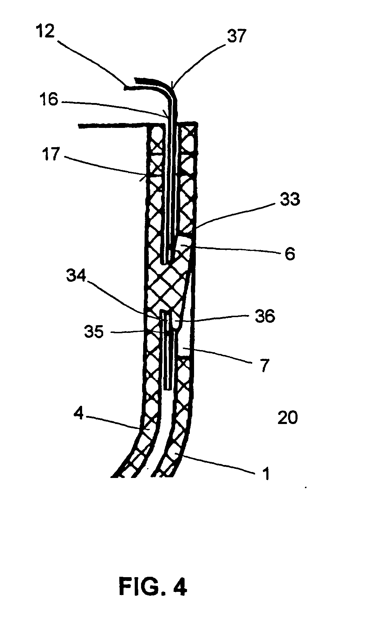

Wie aus Fig. 2 weiterhin ersichtlich, ist an der Airbagwanne 4 gegenüber dem Packraum 13 auf der anderen Seite des Rohrgasgenerators 3 noch ein kleinerer Packraum 14 vorgesehen, der im vorliegenden Falle jedoch nur als Ausdehnungsraum für die durch die Öffnungen 11 durchtretenden Gase benutzt werden soll. Der überwiegend im Packraum 13 gefaltete Airbag 12 ist mit seinem umlaufenden Airbagrand 16 am Rand 17 der Airbagwanne 4 befestigt, wobei sich eine Gewebelage 19 vom Packraum 13 aus über den Rohrgasgenerator 3 erstreckt. Der Airbagrand 16 befindet sich dabei in einem Spalt 20 zwischen dem umlaufenden Rand 17 und einem Gehäuserand 18 des Gehäuses 1. Die Befestigung des Airbagrandes 16 wird anhand der Fig. 4 noch später erläutert.

Abweichend von der Darstellung nach Fig. 1 sind in Fig. 2 die Öffnungen 9 an der Gehäusewand 8 des Gehäuses 1 als halbkreisförmige Schlitze ausgebildet, die in Querrichtung verlaufen und korrespondierend bzw. symmetrisch zu den Öffnungen 11 angeordnet sind. Bei dieser Ausführung sollen die durch den Rohrgasgenerator 3 erzeugten Gase überwiegend durch die Öffnungen 11 in der Airbagwanne 4 hinsichtlich des Durchsatzvolumens und der Richtung des Einblasstromes gesteuert werden. Die Öffnungen 11 sind voneinander unter einem Winkel von etwa 60° symmetrisch zu einer Vertikalebene 15 des Rohrgasgenerators 3 angeordnet.

In Fig. 3 ist im Wesentlichen die Anordnung des Rohrgenerators 3 im Gehäuse 1 dargestellt, der im zylindrischen Aufnahmeraum 2 in an sich bekannter Weise mit einem Befestigungsabschnitt 21 an einer Bodenwand 22 des Gehäuses 1 mittels einer Mutter 23 befestigt ist. Auf der dem Befestigungsabschnitt 21 gegenüber liegenden Seite weist der Rohrgasgenerator 3 einen Bund 24 auf, der relativ dicht in die Öffnung 25 des Aufnahmeraumes 2 einsetzbar ist. Das Gehäuse 1 bildet zusammen mit dem montierten Rohrgasgenerator 3 somit eine montagefertige Baueinheit, die separat herstellbar, lagerbar und gefahrlos transportierbar ist.

Zwischen der Öffnung 25 bzw. dem Bund 24 und dem - auf die Darstellung in Fig. 3 bezogen - rechten Ende des Gehäuses 1 ist genügend Platz für einen weiteren Packraum 26 für den Airbag 12 vorgesehen, der an der Airbagwanne 4 ausgebildet ist und durch eine im oberen Bereich des Aufnahmeraumes 2 vorgesehene Ausnehmung 27 in den Aufnahmeraum 2 hinein ragt. Die zum Rohrgasgenerator 3 zugewandte Wandung 28 des Packraumes 26 ist mit Abstand zum bundseitigen Ende des Rohrgasgenerators 3 positioniert, so dass für die elektrischen Anschlüsse 29 des Rohrgasgenerators 3 ein geschützter Zwischenraum 30 gebildet wird.

Auch auf der - auf die Darstellung in Fig. 3 bezogen - linken Seite des Gehäuses 1 ist zwischen der Bodenwand 22 und dem linken Ende des Gehäuses 1 ein an der Airbagwanne 4 angeformter Packraum 31 vorgesehen, dessen zum Rohrgasgenerator 3 zugewandte Wandung 32 mit Abstand zum Befestigungsabschnitt 21 bzw. zu der Mutter 23 angeordnet ist. Der Rohrgasgenerator 3 ist somit - in einer Draufsicht gesehen - von allen vier Seiten mit Packräumen 13, 14, 26, 31 umgeben, die eine allseitige Umschließung des Rohrgasgenerators 3 durch den Airbag 12 ermöglichen.

Die Verbindung der Airbagwanne 4 mit dem Airbag 12 sowie mit dem Gehäuse 1 ist vergrößert in Fig. 4 dargestellt. Dazu weist die Airbagwanne 4 einstückig ausgebildete Rastnasen 6 auf, die im montierten Zustand jeweils den oberen Rand 33 der Rastöffnung 7 hintergreifen. Am Airbagrand 16 sind ebenfalls Ausnehmungen 34 vorgesehen, die mit den Rastnasen 6 korrespondierend angeordnet sind. Bei der Montage bzw. Befestigung des Airbags 12 wird der Airbagrand 16 derart über den Rand 17 der Airbagwanne 4 gezogen, dass die Rastnasen 6 durch die Ausnehmungen 34 hindurch treten. Die untere Kante 35 der Ausnehmung 34 hintergreift dabei ein einstückig mit der Rastnase 6 ausgebildete Nase 36, damit ein selbständiges Lösen des Airbagrandes 16 verhindert wird. Der letzte Abschnitt des Airbagrandes 16 kann noch zusätzlich mit der Airbagwanne 4 durch Kleben oder Schweißen verbunden werden.

Vor dem Verbinden der Airbagwanne 4 mit dem Gehäuse 1 wird noch eine Abdeckung 37 über dem Airbag 12 montiert, die aus einer üblichen Folie besteht und analog der Befestigung des Airbagrandes 16 im Spalt 20 zwischen der Airbagwanne 4 und dem Gehäuse 1 befestigt wird. Dadurch wird die Airbagwanne 4 zusammen mit dem gefalteten Airbag 12 zu einer montagefertigen kompakten Baueinheit, die mit verringerten Kosten- und Montageaufwand herstellbar ist.

## Patentansprüche

1. Beifahrer-Airbagmodul für Kraftfahrzeuge mit einem Gehäuse (1) zur Aufnahme bzw. Befestigung eines Gasgenerators (3) sowie einer mit dem Gehäuse (1) mit Hilfe von Rastnasen (6) und Rastöffnungen (7) verbindbaren, einen gefalteten Airbag (12) aufnehmenden und den Gasgenerator zumindest teilweise umschließenden Airbagwanne (4), die eine Austrittsöffnung für den Airbag (12) und wenigstens eine Eintrittsöffnung (11) für Gas aufweist, **dadurch gekennzeichnet, dass** die in das Gehäuse (1) einsetzbare Airbagwanne (4) einen in Bezug auf die Entfaltungsrichtung **(X)** des Airbags (12) im Wesentlichen seitlich des Gasgenerators (3) angeordneten Packraum (13) für den Airbag (12) aufweist, und dass die rastende Verbindung zwischen dem Gehäuse (1) und der Airbagwanne(4) durch an dem die Austrittsöffnung umlaufenden Rand (17) der Airbagwanne (4) vorgesehene elastische, nach außen gerichtete Rastnasen (6) und am Gehäuse (1) entsprechend angeordnete Rastöffnungen (7) gebildet ist.

2. Beifahrer-Airbagmodul nach Anspruch 1, **gekennzeichnet durch** eine erste montagefertige Baueinheit, die im Wesentlichen aus dem Gehäuse (1) sowie aus dem in einem Aufnahmeraum (2) des Gehäuses (1) montierten Gasgenerator (3) besteht.

3. Beifahrer-Airbagmodul nach Anspruch 1 oder 2, **gekennzeichnet durch** eine zweite montagefertige Baueinheit, die im Wesentlichen die Airbagwanne (4), den in der Airbagwanne (4) gefalteten Airbag (12) sowie eine den Airbag (12) in der Airbagwanne (4) fixierende bzw. schützende Abdeckung (37) umfasst und zum Verbinden mit der ersten Baueinheit ausgebildet ist.

4. Beifahrer-Airbagmodul nach einem der Ansprüche 1 bis 3, **gekennzeichnet durch** einen am Gehäuse (1) etwa zylindrisch ausgebildeten Aufnahmeraum (2) für den rohrförmigen Gasgenerator (3), wobei der Aufnahmeraum (2) an einer Seite eine Öffnung (25) zum Einführen des Gasgenerators (3) und an einer dieser Öffnung (25) gegenüberliegenden Bodenwand (22) eine Bohrung zum Durchstecken eines Befestigungsabschnitts (21) des Gasgenerators (3) aufweist.

5. Beifahrer-Airbagmodul nach einem der Ansprüche 1 bis **4, gekennzeichnet durch** eine gegenüber dem Gasgenerator (3) asymmetrische Anordnung des Packraumes (13) für den Airbag (12), der sich parallel einer Längsachse des Gasgenerators (3) erstreckt, wobei die Airbagwanne (4) mit einem Abschnitt (10) den Gasgenerator (3) etwa um einen Winkel größer als 90° umschließt.

6. Beifahrer- Airbagmodul nach einem der Ansprüche 1 bis 5, **gekennzeichnet durch** eine Entfaltungsrichtung X des Airbags, die im Wesentlichen **durch** die Ausbildung und Zuordnung zueinander von Gehäuse (1), Gasgenerator (3) und Airbagwanne (4) vorgegeben ist, wobei an dem den Gasgenerator (3) umschließenden Abschnitt (10) der Airbagwanne (4) - im Querschnitt und in Entfaltungsrichtung **X** gesehen - die Eintrittsöffnungen (11) zum Durchtritt der **durch** den Gasgenerator (3) erzeugten Gase vorgesehen sind.

7. Beifahrer-Airbagmodul nach einem der Ansprüche 1 bis 6, **gekennzeichnet durch** eine den zylindrischen Aufnahmeraum (2) des Gasgenerators (3) bildende Gehäusewand (8), an der ebenfalls - im Querschnitt und in Entfaltungsrichtung **X** gesehen - Öffnungen (9) zum Durchtritt der **durch** den Gasgenerator (3) erzeugten Gase vorgesehen sind, wobei diese Öffnungen (9) korrespondierend zu den Öffnungen (11) in der Airbagwanne (4) angeordnet sind.

8. Beifahrer-Airbagmodul nach Anspruch 7, **gekennzeichnet durch** eine derartige Ausbildung und Zuordnung zueinander der Öffnungen (9) in der Gehäusewand (8) und der Eintrittsöffnungen (11), dass entweder die Öffnungen (9) in der Gehäusewand (8) oder die Eintrittsöffnungen (11) oder die Öffnungen (9) und die Eintrittsöffnungen (11) zusammen Diffusoröffnungen für einen volumenmäßig dosierten und/oder richtungsmäßig gezielten Durchtritt der Gase bilden.

9. Beifahrer-Airbagmodul nach den Ansprüchen 1 bis 8, **gekennzeichnet durch** eine Airbagwanne (4), die - entgegen der Entfaltungsrichtung **X** gesehen - den Gasgenerator (3) allseitig umschließt, wodurch weitere Packräume (14, 26, 31) für die Faltungen des Airbags (12) gebildet werden, und zwar wird ein Packraum (31) im Bereich des Befestigungsabschnittes (21) des Gasgenerators (3), ein im Bereich der Öffnung (25) zur Montage des Gasgenerators (3) liegender Packraum (26) und ein sich in Längsrichtung des Aufnahmeraumes (2) erstreckender, gegenüber dem seitlichen Packraum (13) liegender Packraum (14) gebildet.

10. Beifahrer-Airbagmodul nach Anspruch 9, **dadurch gekennzeichnet, dass** der im Bereich des Befestigungsabschnitts (21) liegende Packraum (31) und der im Bereich der Öffnung (25) liegende Packraum (26) parallel zueinander und senkrecht zur Generatorachse ausgerichtet und jeweils mit geringem Abstand vom Befestigungsabschnitt (21) des Gasgenerators (3) bzw. von den auf der gegenüber liegenden Seite des Gasgenerators (3) vorgesehenen elektrischen Anschlüssen (29) angeordnet sind.

11. Beifahrer-Airbagmodul nach einem der vorhergehenden Ansprüche, **gekennzeichnet durch** einen zwischen dem Gehäuse (1) und dem Rand (17) der Airbagwanne (4) befestigten Airbagrand (16), an dem mit den Rastnasen korrespondierende Ausnehmungen (34) vorgesehen sind, deren jeweils eine Kante (35) im befestigten Zustand eine entsprechend an der Rastnase (6) vorgesehene Nase (36) hintergreift.

12. Beifahrer-Airbagmodul nach Anspruch 11, **dadurch gekennzeichnet, dass** eine Abdeckung (37) des Airbags (12) an der Airbagwanne in zur Befestigung des Airbagrandes (16) analoger Weise befestigt ist.

13. Beifahrer-Airbagmodul nach Anspruch 11 oder 12, **gekennzeichnet durch** eine Befestigung des Airbagrandes (16) an der Airbagwanne (4), bei der das freie Ende des Airbagrandes (16) mit der Airbagwanne durch Schweißen oder Kleben verbunden ist.

14. Beifahrer-Airbagmodul nach einem der Ansprüche 11 bis 13, **dadurch gekennzeichnet, dass** der Airbagrand (16) über den Rand (17) der Austrittsöffnung der Airbagwanne (4) gezogen ist.

## Claims

1. Front-seat passenger's air bag module for motor vehicles with a housing (1) for accommodating or fastening a gas generator (3) as well as an air bag receptacle (4) which can be connected to the housing (1) by means of locking lugs (6) and locking openings (7), accommodates a folded air bag (12), at least partly surrounds the gas generator and has an outlet opening for the air bag (12) and at least one inlet opening (11) for gas, **characterised in that** the air bag receptacle (4), which can be inserted in the housing (1), has a packing space (13) for the air bag (12) which is disposed essentially laterally of the gas generator (3) in relation to the direction of deployment (x) of the air bag (12), and **in that** the locking connection between the housing (1) and the air bag receptacle (4) is formed by resilient, outward directed locking lugs (6), which are provided at the edge (17) of the air bag receptacle (4) which extends around the outlet opening, and locking openings (7) disposed in a corresponding manner on the housing (1).

2. Front-seat passenger's air bag module according to Claim 1, **characterised by** a first ready-to-mount construction unit which consists essentially of the housing (1) as well as the gas generator (3) mounted in an accommodation space (2) of the housing (1).

3. Front-seat passenger's air bag module according to Claim 1 or 2, **characterised by** a second ready-to-mount construction unit which essentially comprises the air bag receptacle (4), the air bag (12) folded in the air bag receptacle (4) as well as a cover (37) fixing or protecting the air bag (12) in the air bag receptacle (4) and is formed for connection to the first construction unit.

4. Front-seat passenger's air bag module according to any one of Claims 1 to 3, **characterised by** an approximately cylindrical accommodation space (2) formed with the housing (1) and for the tubular gas generator (3), wherein the accommodation space has on one side an opening (25) for introducing the gas generator (3) and at a bottom wall (22) lying opposite this opening (25) a bore for passing through a fastening portion (21) of the gas generator (3).

5. Front-seat passenger's air bag module according to any one of Claims 1 to 4, **characterised by** an arrangement of the packing space (13) for the air bag (12) which is asymmetrical with respect to the gas generator (3) and extends parallel to a longitudinal axis of the gas generator (3), wherein a portion (10) of the air bag receptacle (4) surrounds the gas generator (3) approximately about an angle which is greater than 90°.

6. Front-seat passenger's air bag module according to any one of Claims 1 to 5, **characterised by** a direction of deployment x of the air bag which is essentially predetermined by the formation and mutual association of the housing (1), gas generator (3) and air bag receptacle (45), wherein the inlet openings (11) for the passage of the gases generated by the gas generator (3) are provided at the portion (10) of the air bag receptacle (4) which surrounds the gas generator (3) - viewed in cross section and in the direction of deployment x.

7. Front-seat passenger's air bag module according to any one of Claims 1 to 6, **characterised by** a housing wall (8) which forms the cylindrical accommodation space (2) of the gas generator (3) and at which - viewed in cross section and in the direction of deployment x - openings (9) for the passage of the gases generated by the gas generator (3) are likewise provided, wherein these openings (9) are disposed so as to correspond to the openings (11) in the air bag receptacle (4).

8. Front-seat passenger's air bag module according to Claim 7, **characterised by** a formation and mutual association of the openings (9) in the housing wall (8) and the inlet openings (11) such that either the openings (9) in the housing wall (8) or the inlet openings (11) or the openings (9) and the inlet openings (11) together form diffuser openings for a gas passage which is metered in terms of volume and/or specific in terms of direction.

9. Front-seat passenger's air bag module according to Claims 1 to 8, **characterised by** an air bag receptacle (4) which - viewed opposite to the direction of deployment x - surrounds the gas generator (3) on all sides, whereby further packing spaces (14, 26, 31) for the folds of the air bag (12) are formed, namely a packing space (31) in the region of the fastening portion (21) of the gas generator (3), a packing space (26) lying in the region of the opening (25) for mounting the gas generator (3) and a packing space (14) extending in the longitudinal direction of the accommodation space (2) and lying opposite the lateral packing space (13).

10. Front-seat passenger's air bag module according to Claim 9, **characterised in that** the packing space (31) lying in the region of the fastening portion (21) and the packing space (26) lying in the region of the opening (25) are oriented parallel to one another and perpendicularly to the generator axis and are in each case disposed at a small spacing from the fastening portion (21) of the gas generator (3) or from the electrical connections (29) provided on the opposite side of the gas generator (3).

11. Front-seat passenger's air bag module according to any one of the preceding Claims, **characterised by** an air bag edge (16) which is fastened between the housing (1) and the edge (17) of the air bag receptacle (4) and at which recesses (34) corresponding with the locking lugs are provided, behind a respective edge (35) of which recesses a lug (36) provided so as to correspond to the locking lug (6) engages in the fastened state.

12. Front-seat passenger's air bag module according to Claim 11, **characterised in that** a cover (37) of the air bag (12) is fastened to the air bag receptacle in a manner similar to the fastening of the air bag edge (16).

13. Front-seat passenger's air bag module according to Claim 11 or 12, **characterised by** a fastening of the air bag edge (16) to the air bag receptacle (4) in which the free end of the air bag edge (16) is connected to the air bag receptacle by welding or adhesion.

14. Front-seat passenger's air bag module according to any one of Claims 11 to 13, **characterised in that** the air bag edge (16) is pulled over the edge (17) of the outlet opening of the air bag receptacle (4).

## Revendications

1. Module de coussin d'air pour passager de véhicules automobiles avec un boîtier (1) pour la réception et la fixation d'un générateur de gaz (3) et avec un bac pour coussin d'air (4) raccordable au boîtier (1) à l'aide de taquets d'encliquetage (6) et d'ouvertures d'encliquetage (7), recevant un coussin d'air plié (12) et entourant au moins partiellement le générateur de gaz, qui comporte une ouverture de sortie pour le coussin d'air (12) et au moins une ouverture d'entrée (11) pour le gaz, **caractérisé en ce que** le bac pour coussin d'air (4) insérable dans le boîtier (1) comporte un compartiment de pliage (13) pour le coussin d'air (12) disposé sensiblement sur le côté du générateur de gaz (3) par rapport à la direction de déploiement (X) du coussin d'air (12) et **en ce que** la liaison par encliquetage entre le boîtier (1) et le bac pour coussin d'air (4) est formée par des taquets d'encliquetage élastiques (6) prévus sur le bord (17) du bac pour coussin d'air (4) entourant l'ouverture de sortie, dirigés vers l'extérieur, et par des ouvertures d'encliquetage (7) disposées de manière appropriée sur le boîtier (1).

2. Module de coussin d'air pour passager selon la revendication 1, **caractérisé par** une première unité modulaire prête au montage qui est essentiellement constituée du boîtier (1) et du générateur de gaz (3) monté dans un compartiment de réception (2) du boîtier (1).

3. Module de coussin d'air pour passager selon la revendication 1 ou 2, **caractérisé par** une deuxième unité modulaire prête au montage qui comprend essentiellement le bac pour coussin d'air (4), le coussin d'air (12) plié dans le bac pour coussin d'air (4) ainsi qu'un couvercle (37) qui fixe ou qui protège le coussin d'air (12) dans le bac pour coussin d'air (4) et qui est conçue pour être raccordée à la première unité modulaire.

4. Module de coussin d'air pour passager selon l'une quelconque des revendications 1 à 3, **caractérisé par** un compartiment de réception (2) à peu près cylindrique formé dans le boîtier (1) pour le générateur de gaz tubulaire (3), le compartiment de réception (2) comportant d'un côté une ouverture (25) pour introduire le générateur de gaz (3) et, dans une paroi de fond (22) opposée à cette ouverture (25), un alésage pour enfoncer un tronçon de fixation (21) du générateur de gaz (3).

5. Module de coussin d'air pour passager selon l'une quelconque des revendications 1 à 4, **caractérisé par** un agencement de le compartiment de pliage (13) pour le coussin d'air (12) asymétrique par rapport au générateur de gaz (3), lequel compartiment s'étend parallèlement à un axe longitudinal du générateur de gaz (3), le bac pour coussin d'air (4) avec un tronçon (10) entourant le générateur de gaz (3) à peu près sur un angle supérieur à 90°.

6. Module de coussin d'air pour passager selon l'une quelconque des revendications 1 à 5, **caractérisé par** une direction de déploiement (X) du coussin d'air qui est sensiblement prédéterminée par la configuration et l'association entre le boîtier (1), le générateur de gaz (3) et le bac pour coussin d'air (4), moyennant quoi, dans le tronçon (10) du bac pour coussin d'air (4) entourant le générateur de gaz (3) - vues en section transversale et dans la direction de déploiement (X) - les ouvertures d'entrée (11) sont prévues pour le passage des gaz générés par le générateur de gaz (3).

7. Module de coussin d'air pour passager selon l'une quelconque des revendications 1 à 6, **caractérisé par** une paroi de boîtier (8) formant le compartiment de réception cylindrique (2) du générateur de gaz tubulaire (3) dans laquelle il est également prévu - vues en section transversale et dans la direction de déploiement (X) - des ouvertures (9) pour le passage des gaz générés par le générateur de gaz (3), ces ouvertures (9) étant placées de manière à correspondre aux ouvertures d'entrée (11) dans le bac pour coussin d'air (4).

8. Module de coussin d'air pour passager selon la revendication 7, **caractérisé par** une configuration et une association entre les ouvertures (9) dans la paroi de boîtier (8) et les ouvertures d'entrée (11) telle que soit les ouvertures (9) dans la paroi de boîtier (8) soit les ouvertures d'entrée (11) soit les ouvertures (9) soit les ouvertures d'entrée (11) forment ensemble des ouverture de diffusion pour un passage des gaz dosé en terme de volume et/ou visé en terme de direction.

9. Module de coussin d'air pour passager selon les revendications 1 à 8, **caractérisé par** un bac pour coussin d'air (4) qui - vu dans la direction inverse de la direction de déploiement (X) - entoure le générateur de gaz (3) de tous les côtés, de sorte que d'autres compartiments de pliage (14, 26, 31) sont formés pour les plis du coussin d'air (12), c'est-à-dire un compartiment de pliage (31) dans la zone du tronçon de fixation (21) du générateur de gaz (3), un compartiment de pliage (26) se trouvant dans la zone de l'ouverture (25) pour le montage du générateur de gaz (3) et un compartiment de pliage (14) s'étendant dans la direction longitudinale de le compartiment de réception (2), se trouvant en face de le compartiment de pliage latéral (13).

10. Module de coussin d'air pour passager selon la revendication 9, **caractérisé en ce que** le compartiment de pliage (31) se trouvant dans la zone du tronçon de fixation (21) et le compartiment de pliage (26) se trouvant dans la zone de l'ouverture (25) sont orientés parallèlement l'un à l'autre et perpendiculairement à l'axe du générateur et sont disposés chacun à une faible distance du tronçon de fixation (21) du générateur de gaz (3) ou des raccords électriques (29) prévus sur le côté opposé du générateur de gaz (3).

11. Module de coussin d'air pour passager selon l'une quelconque des revendications précédentes, **caractérisé par** un bord de coussin d'air (16) fixé entre le boîtier (1) et le bord (17) du bac pour coussin d'air (4) dans lequel sont prévus des évidements (34) correspondant aux taquets d'encliquetage dont une arête respective, (35) à l'état fixé, vient en prise à l'arrière d'un taquet (36) prévu de manière correspondante dans le taquet d'encliquetage (6).

12. Module de coussin d'air pour passager selon la revendication 11, **caractérisé en ce qu'**un couvercle (37) du coussin d'air (12) est fixé au bac pour coussin d'air de manière analogue à la fixation du bord de coussin d'air (16).

13. Module de coussin d'air pour passager selon la revendication 11 ou 12, **caractérisé par** une fixation du bord de coussin d'air (16) au bac pour coussin d'air (4) dans laquelle l'extrémité libre bord de coussin d'air (16) est reliée au bac pour coussin d'air par soudage ou collage.

14. Module de coussin d'air pour passager selon l'une quelconque des revendications 11 à 13, **caractérisé en ce que** le bord de coussin d'air (16) est tiré au-dessus du bord (17) de l'ouverture de sortie du bac pour coussin d'air (4).
